(19) **Europäisches Patentamt**
**European Patent Office**
**Office européen des brevets**

(11) **EP 3 185 160 B1**

(12) **EUROPEAN PATENT SPECIFICATION**

(45) Date of publication and mention
of the grant of the patent:
**26.02.2020 Bulletin 2020/09**

(51) Int Cl.:
***G06F 21/31*** *(2013.01)*     ***G06F 21/84*** *(2013.01)*
***H04W 12/06*** *(2009.01)*     ***G06F 3/041*** *(2006.01)*
***H04W 88/02*** *(2009.01)*     ***G06F 3/0488*** *(2013.01)*

(21) Application number: **16203889.7**

(22) Date of filing: **13.12.2016**

(54) **SCREEN UNLOCKING METHOD AND APPARATUS, TERMINAL**

BILDSCHIRMFREIGABEVERFAHREN UND -VORRICHTUNG, ENDGERÄT

PROCÉDÉ ET APPAREIL DE DÉVERROUILLAGE D'ÉCRAN, TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2015 CN 201510967643**

(43) Date of publication of application:
**28.06.2017 Bulletin 2017/26**

(73) Proprietor: **Xiaomi Inc.**
**Beijing 100085 (CN)**

(72) Inventors:
• **WANG, Guangjian**
**Beijing 100085 (CN)**

• **ZHU, Ruixian**
**Beijing 100085 (CN)**
• **ZOU, Yixing**
**Beijing 100085 (CN)**

(74) Representative: **Grunert, Marcus**
**Dehns Germany**
**Theresienstraße 6-8**
**80333 München (DE)**

(56) References cited:
**CN-A- 103 823 632**     **CN-A- 104 571 894**
**CN-A- 104 915 123**     **US-A1- 2013 318 598**
**US-A1- 2014 111 451**     **US-A1- 2014 201 833**

**Description**

**FIELD**

The present disclosure relates to terminal technology field, and more particularly to a screen unlocking method, a screen unlocking apparatus and a terminal.

**BACKGROUND**

In the related art, a pattern unlocking function has been realized for a screen of a terminal such as a mobile phone. However, for unlocking the screen, it is required to light the screen first, and then the unlocking pattern is entered, which does not only waste energy, but also is hard to operate, thus bringing inconvenience to a user and causing a poor experience.

CN 103823632 provides a screen unlocking method. The screen unlocking method comprises the following steps of obtaining unlocking information input by a user, wherein a screen is in the unlighted status; judging whether the unlocking information is matched with an unlocking condition or not; if it is determined that the unlocking information is matched with the unlocking condition, unlocking the screen, and lighting up the screen; keeping the screen locking and unlighted status if it is determined that the unlocking information is not matched with the unlocking condition. The screen unlocking method has the advantages that a user can flexibly use various unlocking modes for unlocking electronic equipment with a currently-locked screen so as to continuously conduct further operations, mistaken operations such as mistaken unlocking and mistaken program starting under the locking status are avoided, the unlocking operating process is secret and safe, and the privacy of the user can be effectively protected.

US 2014201833 provides a method for fast activating applications of an electronic device having a touch screen displaying a predetermined unlocking interface on the touch screen when the electronic device wakes from an idle state. The predetermined unlocking interface includes a plurality of pattern drawing regions. Each pattern drawing region corresponds to a predetermined application of the electronic device. When a pattern drawn by the user within any of the pattern drawing regions is the same as a preset unlocking pattern, the electronic device is unlocked. Then, an application of the electronic device corresponding to one of the pattern drawing regions in which the pattern is drawn is activated.

US 2014111451 provides a user interface display method and apparatus of a touch-enabled device. The user interface display method includes detecting a touch gesture; analyzing at least one of a contact position, a movement direction, a contact area size, a contact area shape, and an occurrence frequency of the touch gesture; determining one of a left hand grip state and a right hand grip state of the device based on a result of the analysis; and displaying a user interface corresponding to the determined one of the left hand grip state and the right hand grip state.

CN 104571894 provides a touch screen unlocking method and device. The method includes 1, storing the pattern passwords set by a user; 2, when the user presses the screen, judging whether a sensed point belongs to a sensing pattern or not, if so, lighting the corresponded sensing pattern; 3, when the finger of the user slides to the next sensing patter, judging whether other sensing patterns exist on the connection line of two sensing patterns or not, if so, omitting the step of connecting the two sensing patterns through a lighting line; if not, connecting the two sensing patterns through a lighting line; 4, repeating the step 3 until the finger of the user separates from the touch screen, and generating an unlocking trace pattern; 5, comparing the unlocking trace pattern with the set pattern passwords, if the unlocking trace pattern is consistent with the set pattern passwords, unlocking the touch screen. The number of setting manners of the locking passwords is increased by more than 2 times of that of traditional manners, the purpose of unlocking can be achieved through different sliding paths, in other words, the locking path and unlocking path can be inconsistent, and the unlocking can be implemented by guaranteeing that the sliding path contains the sensing patterns and the sensing sequence is consistent with that during encryption.

**SUMMARY**

In order to solve problems in the related art, the present invention provides a screen unlocking method, a screen unlocking apparatus and a terminal. The invention is defined in the independent claims.

According to embodiments of a first aspect of the present invention, a screen unlocking method is provided. The method includes:

obtaining a sliding path of a user on a screen, if a preset operation of the user on the screen is detected;
determining a similarity between the sliding path and a preset unlocking pattern; and
unlocking the screen and lighting the screen, if the similarity between the sliding path and the preset unlocking pattern is greater than or equal to a preset threshold.

Advantageously, obtaining a sliding path of a user on a screen if a preset operation of the user on the screen is detected includes:

> detecting a press operation of the user on the screen;
> obtaining a press force of the press operation; and
> obtaining the sliding path of the user on the screen, if the press force is greater than or equal to a preset force threshold.

Advantageously, obtaining a sliding path of a user on a screen if a preset operation of the user on the screen is detected includes:

> detecting a press operation of the user on the screen;
> obtaining a press duration of the press operation; and
> obtaining the sliding path of the user on the screen, if the press duration is within a preset duration range.

Advantageously, obtaining a sliding path of a user on a screen includes:

> detecting a sliding operation of the user at any location of the screen;
> judging whether a press force of the sliding operation at a beginning point is greater than a preset force threshold;
> obtaining location coordinates corresponding to the sliding operation if the press force is greater than the preset force threshold; and
> determining the sliding path based on the location coordinates.

Advantageously, determining a similarity between the sliding path and a preset unlocking pattern includes:

> transforming a pattern corresponding to the sliding path to have a same size as the preset unlocking pattern;
> calculating a histogram of a transformed pattern corresponding to the sliding path and calculating a histogram of the preset unlocking pattern; and
> determining the similarity between the sliding path and the preset unlocking pattern according to a similarity between the two histograms.

According to the invention, the method further includes:
after the preset operation of the user on the screen is detected, lighting the sliding path of the user on the screen if the sliding path of the user on the screen is detected.

According to embodiments of a second aspect of the present invention, a screen unlocking apparatus is provided. The apparatus includes:

> an obtaining module, configured to obtain a sliding path of a user on a screen, if a preset operation of the user on the screen is detected;
> a determining module, configured to determine a similarity between the sliding path and a preset unlocking pattern; and
> an unlocking module, configured to unlock the screen and light the screen, if the similarity between the sliding path and the preset unlocking pattern is greater than or equal to a preset threshold.

Advantageously, the obtaining module includes:

> a first detecting sub-module, configured to detect a press operation of the user on the screen;
> a first acquiring sub-module, configured to obtain a press force of the press operation; and
> a first obtaining sub-module, configured to obtain the sliding path of the user on the screen, if the press force is greater than or equal to a preset force threshold.

Advantageously, the obtaining module includes:

> a second detecting sub-module, configured to detect a press operation of the user on the screen;
> a second acquiring sub-module, configured to obtain a press duration of the press operation; and
> a second obtaining sub-module, configured to obtain the sliding path of the user on the screen, if the press duration is within a preset duration range.

Advantageously, the obtaining module includes:

a third detecting sub-module, configured to detect a sliding operation of the user at any location of the screen;

a judging sub-module, configured to judge whether a press force of the sliding operation at a beginning point is greater than a preset force threshold;

a third obtaining sub-module, configured to obtain location coordinates corresponding to the sliding operation if the press force is greater than the preset force threshold; and

a first determining sub-module, configured to determine the sliding path based on the location coordinates.

Advantageously, the determining module includes:

a transforming sub-module, configured to transform a pattern corresponding to the sliding path to have a same size as the preset unlocking pattern;

a calculating sub-module, configured to calculate a histogram of a transformed pattern corresponding to the sliding path and to calculate a histogram of the preset unlocking pattern; and

a second determining sub-module, configured to determine the similarity between the sliding path and the preset unlocking pattern according to a similarity between the two histograms.

According to the invention, the apparatus further includes:
a lighting module, configured to light the sliding path of the user on the screen if the sliding path of the user on the screen is detected after the preset operation of the user on the screen is detected.

According to embodiments of a third aspect of the present invention, a terminal is provided. The terminal includes:

a processor; and

a memory, configured to store instructions executable by the processor;

in which, the processor is configured to perform the screen unlocking method according to the embodiments of the first aspect of the present invention.

According to embodiments of a fourth aspect of the present invention, a computer-readable storage medium is provided. The computer-readable storage medium has stored therein instructions that, when executed by a processor of a terminal, causes the terminal to perform the screen unlocking method according to the embodiments of the first aspect of the present invention.

The technical solutions provided by embodiments of the present invention may have the following beneficial effects.

In the present disclosure, the terminal may obtain the sliding path at any location on the screen if the preset operation on the screen is detected, and may unlock the screen if the similarity between the sliding path and the preset unlocking pattern is greater than the preset threshold. In this way, the user may unlock the screen by drawing the unlocking pattern of any size at any location on the screen, without the need of pressing the power button and without the need of lighting the whole screen, thus simplifying and facilitating the user operation, saving energy consumption of the screen and improving the user experience.

In the present disclosure, the terminal may set the force threshold in advance, and only when the press force of the detected press operation is greater than or equal to the force threshold, the terminal may further determine the sliding path on the screen, thus avoiding the accident touch or misoperation of the user and increasing the accuracy of unlocking the screen.

In the present disclosure, the terminal may set the duration threshold in advance, and only when the press duration of the detected press operation is within the duration threshold range, the terminal may further determine the sliding path on the screen, thus avoiding the accident touch or misoperation of the user and increasing the accuracy of unlocking the screen.

In the present disclosure, in order to further avoid the accident touch or misoperation, the terminal may obtain the press force at the beginning point of the sliding operation, and determine whether the press force is greater than the force threshold, and only when the press force at the beginning point of drawing the unlocking pattern is greater than the force threshold, the terminal can determine that the user is executing the unlocking operation and can further determine the unlocking pattern.

In the present disclosure, the terminal can only turn on the backlight at the press location, for example, turn on the backlight for a preset period such as 3 seconds, or make the backlight flash a preset times such as 3 times, without the need of lighting the whole screen, which can effectively remind the user that the terminal has detected the press operation and a next operation of inputting the unlocking pattern can be performed, while the electric energy is saved.

In the present disclosure, the terminal can turn on the backlights at locations corresponding to the sliding path, without the need of lighting the whole screen, thus facilitating the user to check whether the unlocking pattern inputted is correct by himself, and saving the energy consumption of the screen.

It should be understood that, the above general description and following detail description are exemplary and explanatory, and shall not be construed to limit the present invention.

## BRIEF DESCRIPTION OF THE DRAWINGS

The accompanying drawings, which are incorporated in and constitute a part of this specification, illustrate embodiments consistent with the present invention and, together with the description, serve to explain the principles of the present invention.

Fig. 1 is a flow chart of a screen unlocking method according to an exemplary embodiment of the present disclosure.
Fig. 2 is a flow chart of another screen unlocking method according to an exemplary embodiment of the present disclosure.
Fig. 3 is a schematic diagram showing an application scenario in which a screen unlocking method is applied according to an exemplary embodiment of the present disclosure.
Fig. 4 is a block diagram of a screen unlocking apparatus according to an exemplary embodiment of the present disclosure.
Fig. 5 is a block diagram of another screen unlocking apparatus according to an exemplary embodiment of the present disclosure.
Fig. 6 is a block diagram of another screen unlocking apparatus according to an exemplary embodiment of the present disclosure.
Fig. 7 is a block diagram of another screen unlocking apparatus according to an exemplary embodiment of the present disclosure.
Fig. 8 is a block diagram of another screen unlocking apparatus according to an exemplary embodiment of the present disclosure.
Fig. 9 is a block diagram of another screen unlocking apparatus according to an exemplary embodiment of the present disclosure.
Fig. 10 is a block diagram of another screen unlocking apparatus according to an exemplary embodiment of the present disclosure.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

Terms used in the present disclosure are merely used for describing particular embodiments, instead of limiting the present disclosure. The singular form "a", "the" and "said" used in the present disclosure and the appended claims are also intended to include plural forms, unless expressed clearly in the context. It should be also understood that, term "and/or" used herein means including any combination or all possible combinations of one or more listed items related to each other.

It should be understood that, although terms such as first, second and third are used to describe respective information in the present disclosure, these information are not limited to these terms. These terms are merely used to distinguish information of the same type. For example, without departing from the scope of the present disclosure, the first information may also be referred to as the second information, and similarly, the second information may also be referred to as the first information. Depending on the context, word "if..." used herein can be interpreted as "when..." or "upon..." or "in response to determining...".

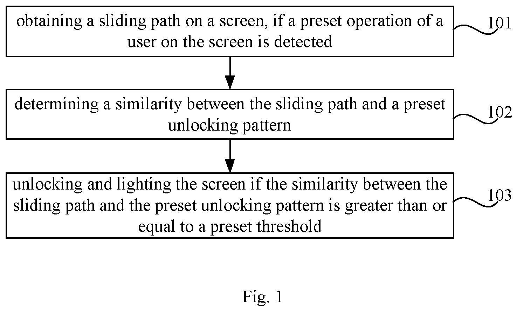

Fig. 1 is a flow chart of a screen unlocking method according to an exemplary embodiment of the present disclosure. As shown in Fig. 1, the method can be used in a terminal, and include steps as follows.

In step 101, a sliding path of a user on a screen is obtained if a preset operation of the user on the screen is detected.

The terminal in the present disclosure may be any smart terminal having a web-surfing function, for example, specifically may be a mobile phone, a tablet PC, a PDA (Personal Digital Assistant), etc. The terminal can access to a router via a wireless LAN (Local Area Network), and access a server on a public network via the router. The terminal in the present disclosure supports a pattern unlocking function.

In step 102, a similarity between the sliding path and a preset unlocking pattern is determined.

In step 103, the screen is unlocked and lighted, if the similarity between the sliding path and the preset unlocking pattern is greater than or equal to a preset threshold.

In the above embodiment, the terminal may obtain the sliding path at any location on the screen if the preset operation on the screen is detected, and may unlock the screen and light the screen if the similarity between the sliding path and the preset unlocking pattern is greater than or equal to the preset threshold. In this way, the user may unlock the screen by drawing the unlocking pattern of any size at any location on the screen, without the need of pressing the power button and without the need of lighting the whole screen, thus simplifying and facilitating the user operation, saving energy consumption of the screen and improving the user experience.

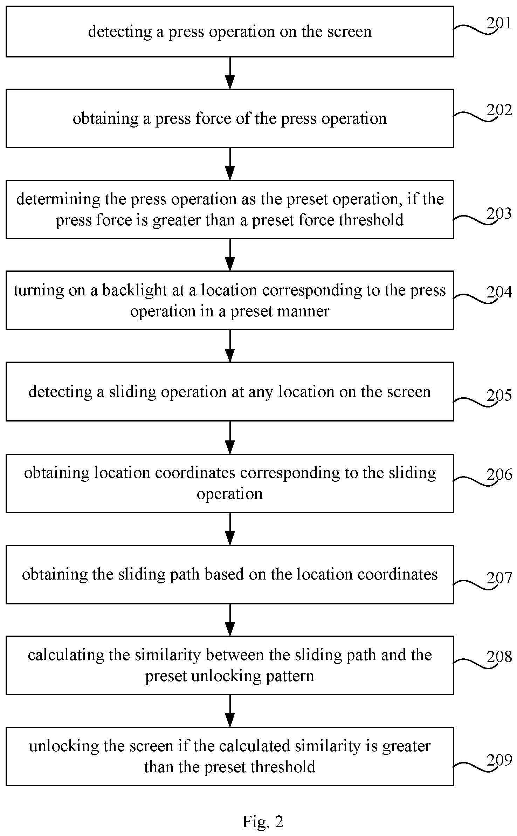

Fig. 2 is a flow chart of another screen unlocking method according to an exemplary embodiment of the present disclosure. As shown in Fig. 2, the method can be used in a terminal, and based on the embodiment shown in Fig. 1, step 101 can include following steps.

In step 201, a press operation on the screen is detected.

In step 202, a press force of the press operation is obtained.

In step 203, the press operation is determined as the preset operation, if the press force is greater than a preset force threshold.

In this embodiment, the terminal can set the force threshold in advance, and only when the press force of the detected press operation is greater than the force threshold, the terminal may further determine the sliding path on the screen.

In another implementation, the terminal can also obtain a press duration of the press operation on the screen, and determine the press operation as the preset operation if the press duration is within a preset duration range. In other words, the preset operation may be in multiple forms, for example, may be a press operation having an operation area satisfying a preset condition, or tapping the screen twice continuously.

It may be determined whether the operation of the user on the screen is the preset operation by executing steps 201~203. If the operation of the user on the screen is the preset operation, steps 204 and 205 are further executed.

In step 204, a backlight at a location corresponding to the press operation is turned on in a preset manner.

In embodiments of the present disclosure, if the preset operation of the user on the screen is detected, only the backlight at the press location is turned on, for example, the backlight is turned on for a preset period such as 3 seconds, or the backlight flashes a preset times such as 3 times, without the need of lighting the whole screen. In this way, while the energy is saved, it may also remind the user that the terminal has detected the press operation and a next operation of inputting the unlocking pattern can be executed.

For obtaining the sliding path of the user on the screen, following steps 205~207 can be executed.

In step 205, the sliding operation at any location on the screen is detected.

In embodiments of the present disclosure, the user may draw the unlocking pattern by performing the sliding operation on the screen. Moreover, in embodiments of the present disclosure, by drawing the unlocking pattern at any location on the screen without limiting the size and location of the pattern, the screen can be unlocked.

In step 206, location coordinates corresponding to the sliding operation are obtained.

In step 207, the sliding path is obtained based on the location coordinates.

In embodiments of the present disclosure, backlights at locations corresponding to the sliding path can be turned on, for example, the path is lighted with the sliding of the user, or the whole path is lighted after the user has completed the sliding operation, without the need of lighting the whole screen, thus facilitating the user to check whether the unlocking pattern is correct by himself and saving the energy consumption of the screen.

In another embodiment, the procedure of obtaining the sliding path of the user on the screen may be executed as follows. The terminal can obtain the press force at a beginning point of the sliding operation and determine whether the press force is greater than the force threshold, and only when the press force is also greater than the force threshold, the terminal determines that the user is executing an unlocking operation.

In addition, if the sliding path of the user on the screen is detected after the preset operation of the user on the screen is detected, the terminal can light the sliding path on the screen simultaneously with the sliding of the user or light the sliding path after the user completes the sliding path.

After the sliding path of the user on the screen is obtained, following steps may be executed.

In step 208, a similarity between the sliding path and the preset unlocking pattern is calculated.

In embodiments of the present disclosure, the unlocking pattern can be preset, for example, the unlocking pattern is drawn by means of a function set in the terminal, and then the terminal saves the drawn pattern confirmed by the user.

In step 209, the screen is unlocked if the similarity calculated is greater than the preset threshold.

In embodiments of the present disclosure, the similarity may be calculated in following ways.

First, the pattern corresponding to the sliding path and the preset unlocking pattern are transformed to have a same size, for example, 256*256, and the codes for implementing this are as follows.

```
public Bitmap Resize(string imageFile, string newImageFile)
```

```
{
img = Image.FromFile(imageFile);
Bitmap imgOutput = new Bitmap(img, 256, 256);
imgOutput.Save(newImageFile,
System.Drawing.Imaging.ImageFormat.Jpeg);
imgOutput.Dispose();
return (Bitmap)Image.FromFile(newImageFile);
}
```

Then, histograms of the transformed patterns are calculated. The codes for implementing this are as follows.
```
public int[] GetHisogram(Bitmap img)
```

Finally, the similarity between the two histograms is calculated.

$$\text{Sim}(G,S)= \frac{1}{N}\sum_{i=1}^{N}\left(1-\frac{\left|g_i - s_i\right|}{Max(g_i, s_i)}\right)$$

where, G is the histogram of the pattern corresponding to the sliding path, S is the histogram of the unlocking pattern, and N is the number of sampling points in the color space
//calculating an absolute value after the subtraction
private float GetAbs(int firstNum, int secondNum)

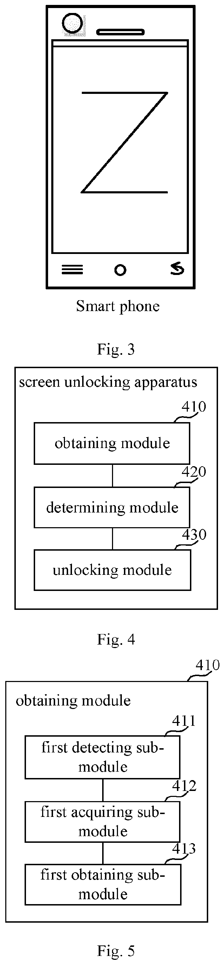

Fig. 3 is a schematic diagram showing an application scenario in which a screen unlocking method is applied according to an exemplary embodiment of the present disclosure. As shown in Fig. 3, the scenario shown in Fig. 3 includes a smart phone used as a terminal.
When a user wants to unlock the smart phone, he/she presses the screen with a certain force. The terminal detects the press operation, obtains the press force, and determines whether the press force is greater than a preset force threshold. When it is determined that the press force is greater than the force threshold, the terminal turns on the backlight at the press location and make the backlight flash 3 times and then turns off the backlight. Then, the user may draw the unlocking pattern "Z" at any location on the screen, and the terminal obtains the corresponding sliding path, compares the sliding path with the preset unlocking pattern to obtain the similarity, and unlocks the screen if the similarity is greater than the preset threshold.
In the application scenario shown in Fig. 3, regarding the specific process for unlocking the screen, reference may be made to the above description for Figs. 1-2, which will not be elaborated herein.
Corresponding to the above embodiments of the screen unlocking method, the present disclosure also provides embodiments of a screen unlocking apparatus and a device on which the screen unlocking method is applied.
Fig. 4 is a block diagram of a screen unlocking apparatus according to an exemplary embodiment of the present disclosure. Referring to Fig. 4, the apparatus is configured to execute the method shown in Fig. 1, and the apparatus may include an obtaining module 410, a determining module 420 and an unlocking module 430.
The obtaining module 410 is configured to obtain a sliding path of a user on a screen, if a preset operation of the user on the screen is detected.
The determining module 420 is configured to determine a similarity between the sliding path obtained by the obtaining module 410 and a preset unlocking pattern.
The unlocking module 430 is configured to unlock the screen and light the screen, if the determining module 420 determines that the similarity between the sliding path and the preset unlocking pattern is greater than or equal to a preset threshold.
In the above embodiment, the terminal may obtain the sliding path at any location on the screen if the preset operation on the screen is detected, and may unlock the screen if the similarity between the sliding path and the preset unlocking pattern is greater than the preset threshold. In this way, the user may unlock the screen by drawing the unlocking pattern of any size at any location on the screen, without the need of pressing the power button and without the need of lighting the whole screen, thus simplifying and facilitating the user operation, saving energy consumption of the screen and improving the user experience.

Fig. 5 is a block diagram of another screen unlocking apparatus according to an exemplary embodiment of the present disclosure. As shown in Fig. 5, based on the embodiment shown in Fig. 4, in this embodiment, the obtaining module 410 may include a first detecting sub-module 411, a first acquiring sub-module 412 and a first obtaining sub-module 413.

The first detecting sub-module 411 is configured to detect a press operation of the user on the screen.

The first acquiring sub-module 412 is configured to obtain a press force of the press operation detected by the first detecting sub-module 411.

The first obtaining sub-module 413 is configured to obtain the sliding path of the user on the screen, if the press force obtained by the first acquiring sub-module 412 is greater than or equal to a preset force threshold.

In the above embodiment, the terminal may set the force threshold in advance, and only when the press force of the detected press operation is greater than or equal to the force threshold, the terminal may further determine the sliding path on the screen, thus avoiding the accident touch or misoperation of the user and increasing the accuracy of unlocking the screen.

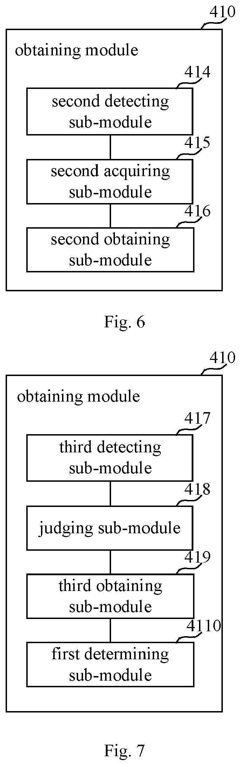

Fig. 6 is a block diagram of another screen unlocking apparatus according to an exemplary embodiment of the present disclosure. As shown in Fig. 6, based on the embodiment shown in Fig. 4, in this embodiment, the obtaining module 410 may include a second detecting sub-module 414, a second acquiring sub-module 415 and a second obtaining sub-module 416.

The second detecting sub-module 414 is configured to detect a press operation of the user on the screen.

The second acquiring sub-module 415 is configured to obtain a press duration of the press operation detected by the second detecting sub-module 414.

The second obtaining sub-module 416 is configured to obtain the sliding path of the user on the screen, if the press duration obtained by the second acquiring module 415 is within a preset duration range.

In the above embodiment, the terminal may set the duration threshold in advance, and only when the press duration of the detected press operation is within the preset duration threshold range, the terminal may further determine the sliding path on the screen, thus avoiding the accident touch or misoperation of the user and increasing the accuracy of unlocking the screen.

Fig. 7 is a block diagram of another screen unlocking apparatus according to an exemplary embodiment of the present disclosure. As shown in Fig. 7, based on the embodiment shown in Fig. 4, in this embodiment, the obtaining module 410 may include a third detecting sub-module 417, a judging sub-module 418, a third obtaining sub-module 419 and a first determining sub-module 4110.

The third detecting sub-module 417 is configured to detect a sliding operation of the user at any location of the screen.

The judging sub-module 418 is configured to judge whether a press force of the sliding operation detected by the third detecting sub-module 417 at a beginning point is greater than a preset force threshold.

The third obtaining sub-module 419 is configured to obtain location coordinates corresponding to the sliding operation, if the judging sub-module 418 determines that the press force is greater than the preset force threshold.

The first determining sub-module 4110 is configured to determine the sliding path based on the location coordinates obtained by the third obtaining sub-module 419.

In the above embodiment, in order to further avoid the accident touch or misoperation, the terminal may obtain the press force at the beginning point of the sliding operation, and determine whether the press force is greater than the force threshold, and only when the press force at the beginning point of drawing the unlocking pattern is greater than the force threshold, the terminal can determine that the user is executing the unlocking operation and can further determine the unlocking pattern.

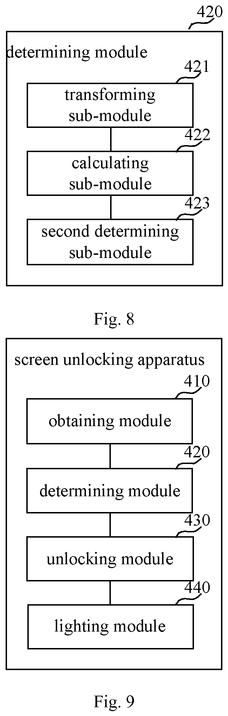

Fig. 8 is a block diagram of another screen unlocking apparatus according to an exemplary embodiment of the present disclosure. As shown in Fig. 8, based on the embodiment shown in Fig. 4, in this embodiment, the determining module 420 may include a transforming sub-module 421, a calculating sub-module 422 and a second determining sub-module 423.

The transforming sub-module 421 is configured to transform a pattern corresponding to the sliding path to have a same size as a preset unlocking pattern.

The calculating sub-module 422 is configured to calculate a histogram of a pattern corresponding to the sliding path transformed by the transforming sub-module 421 and to calculate a histogram of the preset unlocking pattern.

The second determining sub-module 423 is configured to calculate the similarity between the sliding path and the preset unlocking pattern according to a similarity between the two histograms calculated by the calculating sub-module 422.

Fig. 9 is a block diagram of another screen unlocking apparatus according to an exemplary embodiment of the present disclosure. As shown in Fig. 9, based on embodiments shown in any one of Figs. 4-8, the apparatus may further include a lighting module 440.

The lighting module 440 is configured to light the sliding path of the user on the screen if the sliding path of the user on the screen is detected after the preset operation of the user on the screen is detected.

Embodiments of the screen unlocking apparatus shown in Figs. 4-9 can be applied in a terminal.

Regarding implements of functions and actions of respective modules in the above apparatuses, reference may be made to implementations of corresponding steps in the above methods, which will not be elaborated herein.

With respect to apparatus embodiments, since they are basically corresponding to method embodiments, reference may be made to description of relevant parts in method embodiments. Apparatus embodiments described above are merely exemplary, in which units described as separate elements may be or may not be physically separated, and elements displayed as units may be or may not be physical units, i.e., may be located at a same place, or may be distributed on multiple network nits. Some or all of the modules may be chosen according to actual demands, for implementing the purpose of the present disclosure, which may be understood and implemented by those skilled in the art without creative labor.

Corresponding to Fig. 4, the present disclosure also provides a terminal. The terminal includes a processor and a memory configured to store instructions executable by the processor. The processor is configured to: obtain a sliding path of a user on a screen if a preset operation of the user on the screen is detected; determine a similarity between the sliding path and a preset unlocking pattern; and unlock and light the screen if the similarity between the sliding path and the preset unlocking pattern is greater than or equal to a preset threshold.

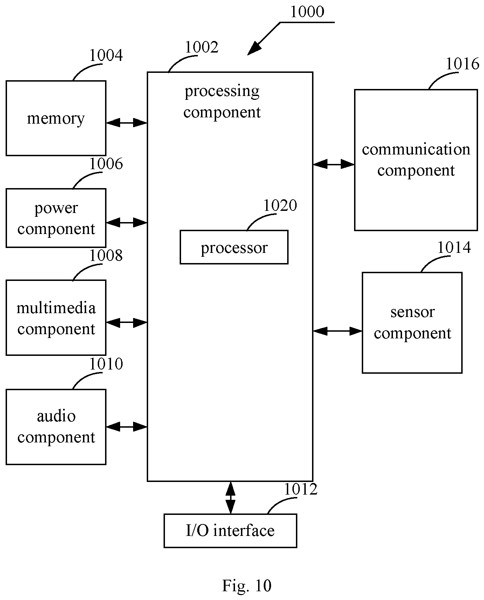

Fig. 10 is a block diagram (at terminal side) of a device 1000 for unlocking a screen according to exemplary embodiments of the present disclosure. For example, the device 1000 may has a routing function, such as a mobile phone, a computer, a digital broadcasting terminal, a messaging device, a game console, a tablet device, a fitness equipment, a medical device, a Personal Digital Assistant (PDA), etc.

Referring to Fig. 10, the device 1000 may include the following one or more components: a processing component 1002, a memory 1004, a power component 1006, a multimedia component 1008, an audio component 1010, an Input/Output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data including said instructions executable by the processor to support the operation of the device 1000. Examples of such data include instructions for any applications or methods operated on the device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 1008 includes a front camera and/or a rear camera. The front camera and/or the rear camera may receive external multimedia data while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone (MIC) configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface for the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000 and relative positioning of components (e.g. the display and the keypad of the device 1000). The sensor component 1014 may also detect a change in position of the device 1000 or of a component in the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate wired or wireless communication between the device 1000 and other devices. The device 1000 can access a wireless network based on a communication standard, such as WIFI, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 1004 including instructions. The above instructions are executable by the processor 1020 in the device 1000, for performing the above-described methods. For example, the non-transitory computer-readable storage medium may be a ROM, a RAM, a CD-ROM, a magnetic tape, a floppy disc, an optical data storage device, and the like.

In exemplary embodiments, there is also provided a non-transitory computer readable storage medium, when instructions in the storage medium are executed by a processor in a mobile terminal, the mobile terminal may execute the above screen unlocking method. The method includes: obtaining a sliding path of a user on a screen if a preset operation of the user on the screen is detected; determining a similarity between the sliding path and a preset unlocking pattern; and unlocking the screen and lighting the screen if the similarity between the sliding path and the preset unlocking pattern is greater than or equal to a preset threshold.

Other embodiments of the present invention will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art.

**Claims**

1. A screen unlocking method, comprising:

   (101) obtaining a sliding path of a user on a screen, if a preset operation of the user on the screen is detected;
   (102) determining a similarity between the sliding path and a preset unlocking pattern; and
   (103) unlocking the screen and lighting the whole screen, if the similarity between the sliding path and the preset unlocking pattern is greater than or equal to a preset threshold;
   wherein the method further comprises:
   after the preset operation of the user on the screen is detected and before determining the similarity between the sliding path and a preset unlocking pattern, lighting the sliding path of the user on the screen simultaneously with the sliding of the user without lighting the whole screen if the sliding path of the user on the screen is detected, wherein (103) determining a similarity between the sliding path and a preset unlocking pattern comprises:

      transforming a pattern corresponding to the sliding path to have a same size as the preset unlocking pattern;
      calculating a histogram of a transformed pattern corresponding to the sliding path and calculating a histogram of the preset unlocking pattern; and
      determining the similarity between the sliding path and the preset unlocking pattern according to a similarity between the two histograms.

2. The method according to claim 1, wherein, (101) obtaining a sliding path of a user on a screen if a preset operation of the user on the screen is detected comprises:

> (201) detecting a press operation of the user on the screen;
> (202) obtaining a press force of the press operation; and
> (203) obtaining the sliding path of the user on the screen, if the press force is greater than or equal to a preset force threshold.

3. The method according to claim 1 or 2, wherein (101) obtaining a sliding path of a user on a screen if a preset operation of the user on the screen is detected comprises:

> detecting a press operation of the user on the screen;
> obtaining a press duration of the press operation; and
> obtaining the sliding path of the user on the screen, if the press duration is within a preset duration range.

4. The method according to any one of claims 1-3, wherein (101) obtaining a sliding path of a user on a screen comprises:

> (205) detecting a sliding operation of the user at any location of the screen;
> judging whether a press force of the sliding operation at a beginning point is greater than a preset force threshold;
> (206) obtaining location coordinates corresponding to the sliding operation if the press force is greater than the preset force threshold; and
> (207) determining the sliding path based on the location coordinates.

5. A screen unlocking apparatus, comprising:

> an obtaining module (410), configured to obtain a sliding path of a user on a screen, if a preset operation of the user on the screen is detected;
> a determining module (420), configured to determine a similarity between the sliding path and a preset unlocking pattern; and
> an unlocking module (430), configured to unlock the screen and light the whole screen, if the similarity between the sliding path and the preset unlocking pattern is greater than or equal to a preset threshold;
> wherein the apparatus further comprises:
> a lighting module (440), configured to light the sliding path of the user on the screen simultaneously with the sliding of the user without lighting the whole screen if the sliding path of the user on the screen is detected after the preset operation of the user on the screen is detected and before determining the similarity between the sliding path and a preset unlocking pattern, wherein the determining module (420) comprises:

>> a transforming sub-module (421), configured to transform a pattern corresponding to the sliding path to have a same size as the preset unlocking pattern;
>> a calculating sub-module (422), configured to calculate a histogram of a transformed pattern corresponding to the sliding path and to calculate a histogram of the preset unlocking pattern; and
>> a second determining sub-module (423), configured to determine the similarity between the sliding path and the preset unlocking pattern according to a similarity between the two histograms.

6. The apparatus according to claim 5, wherein, the obtaining module (410) comprises:

> a first detecting sub-module (411), configured to detect a press operation of the user on the screen;
> a first acquiring sub-module (412), configured to obtain a press force of the press operation; and
> a first obtaining sub-module (413), configured to obtain the sliding path of the user on the screen, if the press force is greater than or equal to a preset force threshold.

7. The apparatus according to claim 5 or 6, wherein the obtaining module (410) comprises:

> a second detecting sub-module (414), configured to detect a press operation of the user on the screen;
> a second acquiring sub-module (415), configured to obtain a press duration of the press operation; and
> a second obtaining sub-module (416), configured to obtain the sliding path of the user on the screen, if the press duration is within a preset duration range.

**8.** The apparatus according to any one of claims 5-7, wherein the obtaining module (410) comprises:

a third detecting sub-module (417), configured to detect a sliding operation of the user at any location of the screen;

a judging sub-module (418), configured to judge whether a press force of the sliding operation at a beginning point is greater than a preset force threshold;

a third obtaining sub-module (419), configured to obtain location coordinates corresponding to the sliding operation if the press force is greater than the preset force threshold; and

a first determining sub-module (4110), configured to determine the sliding path based on the location coordinates.

**9.** A computer-readable storage medium having stored therein instructions that, when executed by a processor (1020) of a terminal, causes the terminal to perform the screen unlocking method according to any one of the claims 1-4.

**Patentansprüche**

**1.** Verfahren zum Entsperren eines Bildschirms, umfassend:

(101) Erhalten eines Gleit- bzw. Wischpfades eines Benutzers auf einem Bildschirm, wenn eine voreingestellte Bedienung des Benutzers auf dem Bildschirm erfasst wird;

(102) Bestimmen einer Ähnlichkeit zwischen dem Gleit- bzw. Wischpfad und einem voreingestellten Entsperrmuster; und

(103) Entsperren des Bildschirms und Beleuchten des gesamten Bildschirms, wenn die Ähnlichkeit zwischen dem Gleit- bzw. Wischpfad und dem voreingestellten Entsperrmuster größer oder gleich einem voreingestellten Schwellenwert ist;

wobei das Verfahren ferner umfasst:

nachdem die voreingestellte Bedienung des Benutzers auf dem Bildschirm erfasst wird und bevor die Ähnlichkeit zwischen dem Gleit- bzw. Wischpfad und einem voreingestellten Entsperrmuster bestimmt wird, Beleuchten des Gleit- bzw. Wischpfades des Benutzers auf dem Bildschirm gleichzeitig mit dem Gleiten bzw. Wischen des Benutzers, ohne den gesamten Bildschirm zu beleuchten, wenn der Gleit- bzw. Wischpfad des Benutzers auf dem Bildschirm erfasst wird, wobei das Bestimmen (103) einer Ähnlichkeit zwischen dem Gleit- bzw. Wischpfad und einem voreingestellten Entsperrmuster umfasst:

Transformieren eines Musters, das dem Gleit- bzw. Wischpfad entspricht, so dass es die gleiche Größe wie das voreingestellte Entsperrmuster hat;

Berechnen eines Histogramms eines transformierten Musters, das dem Gleit- bzw. Wischpfad entspricht, und Berechnen eines Histogramms des voreingestellten Entsperrmusters; und

Bestimmung der Ähnlichkeit zwischen dem Gleit- bzw. Wischpfad und dem vorgegebenen Entsperrmuster auf der Grundlage einer Ähnlichkeit zwischen den beiden Histogrammen.

**2.** Verfahren nach Anspruch 1, wobei (101) das Erhalten eines Gleitpfades eines Benutzers auf einem Bildschirm, wenn eine voreingestellte Bedienung des Benutzers auf dem Bildschirm erfasst wird, umfasst:

(201) Erfassen einer Druckbetätigung des Benutzers auf dem Bildschirm;

(202) Erhalten einer Andrückkraft der Druckbetätigung; und

(203) Erhalten des Gleitpfades des Benutzers auf dem Bildschirm, wenn die Andrückkraft größer oder gleich einem voreingestellten Kraftschwellwert ist.

**3.** Verfahren nach Anspruch 1 oder 2, wobei (101) das Erhalten eines Gleitpfades eines Benutzers auf einem Bildschirm, wenn eine voreingestellte Bedienung des Benutzers auf dem Bildschirm erfasst wird, umfasst:

Erfassen einer Druckbetätigung des Benutzers auf dem Bildschirm;

Erhalten einer Drückdauer der Druckbetätigung; und

Erhalten des Gleitpfades des Benutzers auf dem Bildschirm, wenn die Drückdauer innerhalb eines voreingestellten Zeitbereichs liegt.

**4.** Verfahren nach einem der Ansprüche 1-3, wobei (101) das Erhalten eines Gleitpfades eines Benutzers auf einem Bildschirm umfasst:

(205) Erfassen einer Gleitbetätigung des Benutzers an einer beliebigen Stelle des Bildschirms;
Beurteilen, ob eine Andrückkraft der Gleitbetätigung an einem Startpunkt größer als ein voreingestellter Kraftschwellwert ist;
(206) Erhalten von Ortskoordinaten, die der Gleitbetätigung entsprechen, wenn die Andrückkraft größer als der voreingestellte Kraftschwellwert ist; und
(207) Bestimmen des Gleitpfades auf der Grundlage der Ortskoordinaten.

5. Vorrichtung zum Entsperren eines Bildschirms, umfassend:

ein Erhaltungsmodul (410), das dazu eingerichtet ist, einen Gleitpfad eines Benutzers auf einem Bildschirm zu erhalten, wenn eine voreingestellte Bedienung des Benutzers auf dem Bildschirm erfasst wird;
ein Bestimmungsmodul (420), das dazu eingerichtet ist, eine Ähnlichkeit zwischen dem Gleitpfad und einem voreingestellten Entsperrmuster zu bestimmen; und
ein Entsperrmodul (430), das dazu eingerichtet ist, den Bildschirm zu entsperren und den gesamten Bildschirm zu beleuchten, wenn die Ähnlichkeit zwischen dem Gleitpfad und dem voreingestellten Entsperrmuster größer oder gleich einem voreingestellten Schwellenwert ist;
wobei die Vorrichtung ferner umfasst:
ein Beleuchtungsmodul (440), das dazu eingerichtet ist, den Gleitpfad des Benutzers auf dem Bildschirm gleichzeitig mit dem Gleiten des Benutzers zu beleuchten, ohne den gesamten Bildschirm zu beleuchten, wenn der Gleitpfad des Benutzers auf dem Bildschirm erfasst wird, nachdem die voreingestellte Betätigung des Benutzers auf dem Bildschirm erfasst wurde und bevor die Ähnlichkeit zwischen dem Gleitpfad und einem voreingestellten Entsperrmuster bestimmt wird, wobei das Bestimmungsmodul (420) umfasst:

ein Transformations-Untermodul (421), das dazu eingerichtet ist, ein dem Gleitpfad entsprechendes Muster so zu transformieren, dass es die gleiche Größe wie das voreingestellte Entsperrmuster hat;
ein Berechnungs-Untermodul (422), das dazu eingerichtet ist, ein Histogramm eines transformierten Musters, das dem Gleitpfad entspricht, zu berechnen und ein Histogramm des voreingestellten Entsperrmusters zu berechnen; und
ein zweites Bestimmungs-Untermodul (423), das dazu eingerichtet ist, die Ähnlichkeit zwischen dem Gleitpfad und dem voreingestellten Entsperrmuster gemäß einer Ähnlichkeit zwischen den beiden Histogrammen zu bestimmen.

6. Vorrichtung nach Anspruch 5, wobei das Erhaltungsmodul (410) umfasst:

ein erstes Erfassungs-Untermodul (411), das dazu eingerichtet ist, eine Druckbetätigung des Benutzers auf dem Bildschirm zu erfassen;
ein erstes Erhebungs-Untermodul (412), das dazu eingerichtet ist, eine Andrückkraft der Druckbetätigung zu erhalten; und
ein erstes Erhaltungs-Untermodul (413), das dazu eingerichtet ist, den Gleitpfad des Benutzers auf dem Bildschirm zu erhalten, wenn die Andrückkraft größer oder gleich einem voreingestellten Kraftschwellwert ist.

7. Vorrichtung nach Anspruch 5 oder 6, wobei das Erhaltungsmodul (410) umfasst:

ein zweites Erfassungs-Untermodul (414), das dazu eingerichtet ist, eine Druckbetätigung des Benutzers auf dem Bildschirm zu erfassen;
ein zweites Erhebungs-Untermodul (415), das dazu eingerichtet ist, eine Drückdauer der Druckbetätigung zu erhalten; und
ein zweites Erhaltungs-Untermodul (416), das dazu eingerichtet ist, den Gleitpfad des Benutzers auf dem Bildschirm zu erhalten, wenn die Drückdauer innerhalb eines voreingestellten Zeitbereichs liegt.

8. Vorrichtung nach einem der Ansprüche 5-7, wobei das Erhaltungsmodul (410) umfasst:

ein drittes Erfassungs-Untermodul (417), das dazu eingerichtet ist, eine Gleitbetätigung des Benutzers an einer beliebigen Stelle des Bildschirms zu erfassen;
ein Beurteilungs-Untermodul (418), das dazu eingerichtet ist, zu beurteilen, ob eine Andrückkraft der Gleitbetätigung an einem Startpunkt größer als ein voreingestellter Kraftschwellwert ist;
ein drittes Erhaltungs-Untermodul (419), das dazu eingerichtet ist, Ortskoordinaten zu erhalten, die der Gleitbetätigung entsprechen, wenn die Andrückkraft größer als der voreingestellte Kraftschwellwert ist; und

ein erstes Bestimmungs-Untermodul (4110), das dazu eingerichtet ist, den Gleitpfad auf der Grundlage der Ortskoordinaten zu bestimmen.

9.  Ein computerlesbares Speichermedium mit darin gespeicherten Befehlen, die, wenn sie von einem Prozessor (1020) eines Terminals ausgeführt werden, das Terminal veranlassen, das Verfahren zum Entsperren eines Bildschirms gemäß einem der Ansprüche 1-4 durchzuführen.

**Revendications**

1.  Procédé de déverrouillage d'écran, comportant les étapes consistant à :

    (101) obtenir un chemin de glissement d'un utilisateur sur un écran, si une opération prédéfinie de l'utilisateur sur l'écran est détectée ;
    (102) déterminer une similitude entre le chemin de glissement et un modèle de déverrouillage prédéfini ; et
    (103) déverrouiller l'écran et éclairer la totalité de l'écran, si la similitude entre le chemin de glissement et le modèle de déverrouillage prédéfini est supérieure ou égale à un seuil prédéfini ;
    dans lequel le procédé comporte en outre les étapes consistant à :
    après avoir détecté l'opération prédéfinie de l'utilisateur sur l'écran et avant de déterminer la similitude entre le chemin de glissement et un modèle de déverrouillage prédéfini, éclairer le chemin de glissement de l'utilisateur sur l'écran simultanément au glissement de l'utilisateur sans éclairer la totalité de l'écran si le chemin de glissement de l'utilisateur sur l'écran est détecté, dans lequel l'étape consistant à (103) déterminer une similitude entre le chemin de glissement et un modèle de déverrouillage prédéfini comporte les sous-étapes consistant à :

    transformer un modèle correspondant au chemin de glissement pour qu'il ait la même taille que le modèle de déverrouillage prédéfini ;
    calculer un histogramme d'un modèle transformé correspondant au chemin de glissement et calculer un histogramme du modèle de déverrouillage prédéfini ; et
    déterminer la similitude entre le chemin de glissement et le modèle de déverrouillage prédéfini en fonction d'une similitude entre les deux histogrammes.

2.  Procédé selon la revendication 1, dans lequel l'étape consistant à (101) obtenir un chemin de glissement d'un utilisateur sur un écran si une opération prédéfinie de l'utilisateur sur l'écran est détectée comporte les sous-étapes consistant à :

    (201) détecter une opération de pression de l'utilisateur sur l'écran ;
    (202) obtenir une force de pression de l'opération de pression ; et
    (203) obtenir le chemin de glissement de l'utilisateur sur l'écran, si la force de pression est supérieure ou égale à un seuil de force prédéfini.

3.  Procédé selon la revendication 1 ou 2, dans lequel l'étape consistant à (101) obtenir un chemin de glissement d'un utilisateur sur un écran si une opération prédéfinie de l'utilisateur sur l'écran est détectée comporte les sous-étapes consistant à :

    détecter une opération de pression de l'utilisateur sur l'écran ;
    obtenir une durée de pression de l'opération de pression ; et
    obtenir le chemin de glissement de l'utilisateur sur l'écran, si la durée de pression est dans les limites d'une plage de durées prédéfinie.

4.  Procédé selon l'une quelconque des revendications 1 à 3, dans lequel l'étape consistant à (101) obtenir un chemin de glissement d'un utilisateur sur un écran comporte les sous-étapes consistant à :

    (205) détecter une opération de glissement de l'utilisateur à un emplacement quelconque de l'écran ;
    juger si une force de pression de l'opération de glissement à un point de départ est supérieure à un seuil de force prédéfini ;
    (206) obtenir des coordonnées d'emplacement correspondant à l'opération de glissement si la force de pression est supérieure au seuil de force prédéfini ; et
    (207) déterminer le chemin de glissement sur la base des coordonnées d'emplacement.

**5.** Appareil de déverrouillage d'écran, comportant :

un module d'obtention (410), configuré pour obtenir un chemin de glissement d'un utilisateur sur un écran, si une opération prédéfinie de l'utilisateur sur l'écran est détectée ;
un module de détermination (420), configuré pour déterminer une similitude entre le chemin de glissement et un modèle de déverrouillage prédéfini ; et
un module de déverrouillage (430), configuré pour déverrouiller la totalité de l'écran et éclairer l'écran, si la similitude entre le chemin de glissement et le modèle de déverrouillage prédéfini est supérieure ou égale à un seuil prédéfini ;
dans lequel l'appareil comporte en outre :
un module d'éclairage (440), configuré pour éclairer le chemin de glissement de l'utilisateur sur l'écran simultanément au glissement de l'utilisateur sans éclairer la totalité de l'écran si le chemin de glissement de l'utilisateur sur l'écran est détecté après avoir détecté l'opération prédéfinie de l'utilisateur sur l'écran et avant de déterminer la similitude entre le chemin de glissement et un modèle de déverrouillage prédéfini, dans lequel le module de détermination (420) comporte :

un sous-module de transformation (421), configuré pour transformer un modèle correspondant au chemin de glissement pour qu'il ait la même taille que le modèle de déverrouillage prédéfini ;
un sous-module de calcul (422), configuré pour calculer un histogramme d'un modèle transformé correspondant au chemin de glissement et calculer un histogramme du modèle de déverrouillage prédéfini ; et
un second sous-module de détermination (423), configuré pour déterminer la similitude entre le chemin de glissement et le modèle de déverrouillage prédéfini en fonction d'une similitude entre les deux histogrammes.

**6.** Appareil selon la revendication 5, dans lequel le module d'obtention (410) comporte :

un premier sous-module de détection (411), configuré pour détecter une opération de pression de l'utilisateur sur l'écran ;
un premier sous-module d'acquisition (412), configuré pour obtenir une force de pression de l'opération de pression ; et
un premier sous-module d'obtention (413), configuré pour obtenir le chemin de glissement de l'utilisateur sur l'écran, si la force de pression est supérieure ou égale à un seuil de force prédéfini.

**7.** Appareil selon la revendication 5 ou 6, dans lequel le module d'obtention (410) comporte :

un deuxième sous-module de détection (414), configuré pour détecter une opération de pression de l'utilisateur sur l'écran ;
un second sous-module d'acquisition (415), configuré pour détecter une durée de pression de l'opération de pression ; et
un deuxième sous-module d'obtention (416), configuré pour obtenir le chemin de glissement de l'utilisateur sur l'écran, si la durée de pression est dans les limites d'une plage de durées prédéfinie.

**8.** Appareil selon l'une quelconque des revendications 5 à 7, dans lequel le module d'obtention (410) comporte :

un troisième sous-module de détection (417), configuré pour détecter une opération de glissement de l'utilisateur à un emplacement quelconque de l'écran ;
un sous-module de jugement (418), configuré pour juger si une force de pression de l'opération de glissement à un point de départ est supérieure à un seuil de force prédéfini ;
un troisième sous-module d'obtention (419), configuré pour obtenir des coordonnées d'emplacement correspondant à l'opération de glissement si la force de pression est supérieure au seuil de force prédéfini ; et
un premier sous-module de détermination (4110), configuré pour déterminer le chemin de glissement sur la base des coordonnées d'emplacement.

**9.** Support de stockage lisible par ordinateur dans lequel sont stockées des instructions qui, lorsqu'elles sont exécutées par un processeur (1020) d'un terminal, amènent le terminal à mettre en œuvre le procédé de déverrouillage d'écran selon l'une quelconque des revendications 1 à 4.

obtaining a sliding path on a screen, if a preset operation of a user on the screen is detected ⌇ 101

determining a similarity between the sliding path and a preset unlocking pattern ⌇ 102

unlocking and lighting the screen if the similarity between the sliding path and the preset unlocking pattern is greater than or equal to a preset threshold ⌇ 103

Fig. 1

```
┌────────────────────────────────────────────────────────┐
│        detecting a press operation on the screen         │──∿ 201
└────────────────────────────────────────────────────────┘
                            │
                            ▼
┌────────────────────────────────────────────────────────┐
│        obtaining a press force of the press operation    │──∿ 202
└────────────────────────────────────────────────────────┘
                            │
                            ▼
┌────────────────────────────────────────────────────────┐
│ determining the press operation as the preset operation, if the │──∿ 203
│  press force is greater than a preset force threshold    │
└────────────────────────────────────────────────────────┘
                            │
                            ▼
┌────────────────────────────────────────────────────────┐
│ turning on a backlight at a location corresponding to the press │──∿ 204
│             operation in a preset manner                 │
└────────────────────────────────────────────────────────┘
                            │
                            ▼
┌────────────────────────────────────────────────────────┐
│   detecting a sliding operation at any location on the screen │──∿ 205
└────────────────────────────────────────────────────────┘
                            │
                            ▼
┌────────────────────────────────────────────────────────┐
│ obtaining location coordinates corresponding to the sliding │──∿ 206
│                      operation                           │
└────────────────────────────────────────────────────────┘
                            │
                            ▼
┌────────────────────────────────────────────────────────┐
│ obtaining the sliding path based on the location coordinates │──∿ 207
└────────────────────────────────────────────────────────┘
                            │
                            ▼
┌────────────────────────────────────────────────────────┐
│ calculating the similarity between the sliding path and the │──∿ 208
│               preset unlocking pattern                   │
└────────────────────────────────────────────────────────┘
                            │
                            ▼
┌────────────────────────────────────────────────────────┐
│ unlocking the screen if the calculated similarity is greater │──∿ 209
│            than the preset threshold                     │
└────────────────────────────────────────────────────────┘
```

Fig. 2

Smart phone

Fig. 3

screen unlocking apparatus

410
obtaining module

420
determining module

430
unlocking module

Fig. 4

410
obtaining module

411
first detecting sub-module

412
first acquiring sub-module

413
first obtaining sub-module

Fig. 5

410

obtaining module

414

second detecting
sub-module

415

second acquiring
sub-module

416

second obtaining
sub-module

Fig. 6

410

obtaining module

417

third detecting
sub-module

418

judging sub-module

419

third obtaining
sub-module

4110

first determining
sub-module

Fig. 7

EP 3 185 160 B1

420

determining module

421

transforming
sub-module

422

calculating
sub-module

423

second determining
sub-module

Fig. 8

screen unlocking apparatus

410

obtaining module

420

determining module

430

unlocking module

440

lighting module

Fig. 9

20

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103823632
- US 2014201833 A
- US 2014111451 A
- CN 104571894